# EUROPEAN PATENT SPECIFICATION

(11) **EP 4 456 210 B1**
(45) Date of publication and mention of the grant of the patent: **22.04.2026**
(21) Application number: 23747113.1
(22) Date of filing: 27.01.2023
(51) Int. Cl.: H01M 8/0228, C25B 1/04, C25B 9/65, H01B 1/02, C25B 13/07, C25B 9/70, H01B 1/00, C25B 11/077, H01M 8/0215, H01M 8/0245, H01M 8/0247, H01M 8/04, H01M 8/12, H01M 8/2475

(54) **ELECTROCONDUCTIVE MEMBER, ELECTROCHEMICAL CELL, ELECTROCHEMICAL CELL DEVICE, MODULE, AND MODULE ACCOMMODATION DEVICE**
ELEKTRISCH LEITENDES ELEMENT, ELEKTROCHEMISCHE ZELLE, ELEKTROCHEMISCHE ZELLENVORRICHTUNG, MODUL UND MODULAUFNAHMEVORRICHTUNG
ÉLÉMENT ÉLECTROCONDUCTEUR, CELLULE ÉLECTROCHIMIQUE, DISPOSITIF À CELLULE ÉLECTROCHIMIQUE, MODULE ET DISPOSITIF DE RÉCEPTION DE MODULE

(30) Priority: 27.01.2022 JP 2022011233
(43) Date of publication of application: 30.10.2024
(73) Proprietor: Kyocera Corporation, Kyoto-shi, Kyoto 612-8501 (JP)
(72) Inventor: YAMAGUCHI, Atsuki, Kyoto-shi, Kyoto 612-8501 (JP); HARA, Akihiro, Kyoto-shi, Kyoto 612-8501 (JP); HIRAO, Kazuki, Kyoto-shi, Kyoto 612-8501 (JP)
(74) Representative: Viering, Jentschura & Partner mbB Patent- und Rechtsanwälte
(86) International application number: PCT/JP2023/002725
(87) International publication number: WO 2023/145903

(56) References cited:
- EP-A1- 1 976 045
- EP-A1- 3 410 523
- EP-A1- 4 325 527
- WO-A1-2007/083627
- WO-A1-2017/131176
- WO-A1-2021/172481
- WO-A1-2021/172481
- WO-A1-2022/220268
- JP-A- 2001 349 675
- JP-A- 2013 527 309
- JP-A- 2015 183 252
- JP-A- 2015 183 252
- US-A1- 2013 004 881

## Description

### TECHNICAL FIELD

The present disclosure relates to an electrically conductive member, an electrochemical cell, an electrochemical cell device, a module, and a module housing device.

### BACKGROUND OF INVENTION

In recent years, various fuel cell stack devices each including a plurality of fuel cells which are a type of cells that can obtain electric power using a fuel gas such as hydrogen-containing gas and an oxygen-containing gas such as air, have been proposed as next-generation energy.

### CITATION LIST

### PATENT LITERATURE

Patent Document 1: WO 2009/131180
Moreover, US 2013/004881 A1, EP 3410 523 A1, EP 1976045 A1, WO 2021/172481 A1, and JP 2015 183252 A also disclose materials for fuel cell stack devices and associated devices comprising the same.

### SUMMARY

The present invention provides an electrically conductive member according to claim 1, an electrochemical cell according to claim 8, an electrochemical cell according to claim 10, an electrochemical cell device according to claim 11, a module according to claim 12, and a module housing device according to claim 13. Preferred embodiments are described in the dependent claims.

### BRIEF DESCRIPTION OF THE DRAWINGS

FIG. 1A is a horizontal cross-sectional view illustrating an example of an electrochemical cell according to a first embodiment.
FIG. 1B is a side view of an example of the electrochemical cell according to the first embodiment when viewed from the side of an air electrode.
FIG. 1C is a side view of an example of the electrochemical cell according to the first embodiment when viewed from the side of an interconnector.
FIG. 2A is a perspective view illustrating an example of an electrochemical cell device according to the first embodiment.
FIG. 2B is a cross-sectional view taken along a line X-X illustrated in FIG. 2A.
FIG. 2C is a top view illustrating an example of the electrochemical cell device according to the first embodiment.
FIG. 3 is a horizontal cross-sectional view illustrating an example of an electrically conductive member according to the first embodiment.
FIG. 4A is a cross-sectional view taken along a line A-A illustrated in FIG. 3.
FIG. 4B is an enlarged view of a region B illustrated in FIG. 4A.
FIG. 5 is an exterior perspective view illustrating an example of a module according to the first embodiment.
FIG. 6 is an exploded perspective view schematically illustrating an example of a module housing device according to the first embodiment.
FIG. 7A is a cross-sectional view illustrating an example of an electrochemical cell according to a second embodiment.
FIG. 7B is an enlarged cross-sectional view of an electrically conductive member according to the second embodiment.
FIG. 8A is a perspective view illustrating an example of an electrochemical cell according to a third embodiment.
FIG. 8B is a partial cross-sectional view of the electrochemical cell illustrated in FIG. 8A.
FIG. 8C is a partial cross-sectional view of the electrochemical cell illustrated in FIG. 8A.
FIG. 9A is a horizontal cross-sectional view illustrating an example of an electrochemical cell according to a fourth embodiment.
FIG. 9B is a horizontal cross-sectional view illustrating another example of the electrochemical cell according to the fourth embodiment.
FIG. 9C is a horizontal cross-sectional view illustrating another example of the electrochemical cell according to the fourth embodiment.
FIG. 9D is an enlarged cross-sectional view of a region C illustrated in FIG. 9A.
FIG. 10 is a cross-sectional view illustrating another example of the electrochemical cell according to the first embodiment.

### DESCRIPTION OF EMBODIMENTS

In the fuel cell stack device described above, the internal resistance of the electrically conductive member may increase, which could reduce power generation capability.

Therefore, it is desired to provide an electrically conductive member, an electrochemical cell, an electrochemical cell device, a module, and a module housing device, which can suppress the increase in the internal resistance.

Embodiments of an electrically conductive member, an electrochemical cell, an electrochemical cell device, a module, and a module housing device disclosed in the present application will be described in detail with reference to the accompanying drawings. Note that the disclosure is not limited by the following embodiments.

Note that the drawings are schematic and that the dimensional relationships between elements, the proportions of the elements, and the like may differ from the actual ones. There may be differences between the drawings in the dimensional relationships, proportions, and the like.

### First Embodiment

### Configuration of Electrochemical Cell

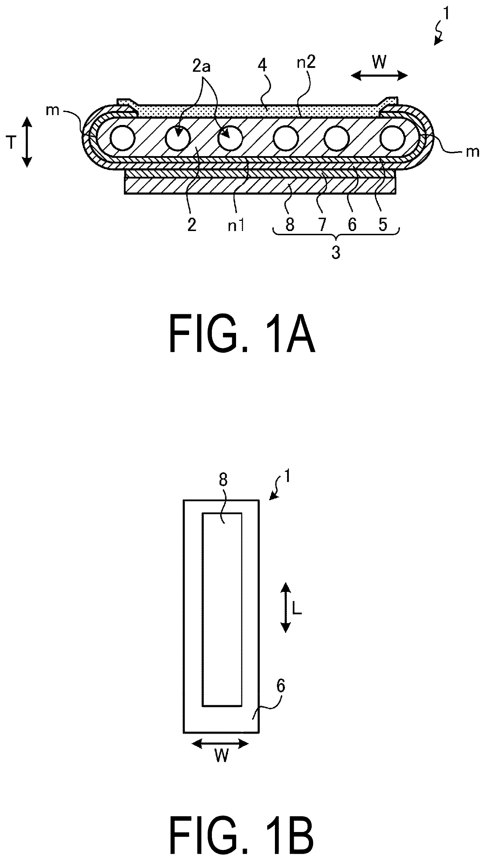

First, with reference to FIGs. 1A to 1C, an example of a solid oxide fuel cell will be described as an electrochemical cell according to a first embodiment. The electrochemical cell device may include a cell stack including a plurality of the electrochemical cells. The electrochemical cell device including the plurality of electrochemical cells is simply referred to as a cell stack device.

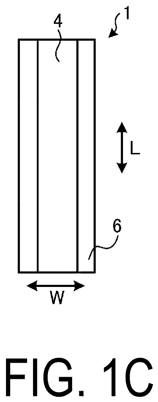

FIG. 1A is a horizontal cross-sectional view illustrating an example of an electrochemical cell according to the first embodiment, FIG. 1B is a side view of an example of the electrochemical cell according to the first embodiment when viewed from an air electrode side, and FIG. 1C is a side view of an example of the electrochemical cell according to the first embodiment when viewed from an interconnector side. Note that FIGs. 1A to 1C each illustrate an enlarged view of a part of a respective one of configurations of the electrochemical cell. Hereinafter, the electrochemical cell may be simply referred to as a cell.

In the example illustrated in FIGs. 1A to 1C, the cell 1 is hollow flat plate-shaped, and has an elongated plate shape. As illustrated in FIG. 1B, the shape of the entire cell 1 when viewed from the side is a rectangle having a side length of, for example, from 5 cm to 50 cm in a length direction L and a length of, for example, from 1 cm to 10 cm in a width direction W orthogonal to the length direction L. The thickness of the entire cell 1 in a thickness direction T is, for example, from 1 mm to 5 mm.

As illustrated in FIG. 1A, the cell 1 includes a support substrate 2 with electrical conductivity, an element portion 3, and an interconnector 4. The support substrate 2 has a pillar shape with a pair of facing flat surfaces n1, n2 and a pair of side surfaces m in a circular arc shape connecting the flat surfaces n1, n2.

The element portion 3 is located on the flat surface n1 of the support substrate 2. The element portion 3 includes a fuel electrode 5, a solid electrolyte layer 6, and an air electrode 8. In the example illustrated in FIG. 1A, the interconnector 4 is located on the flat surface n2 of the cell 1. Note that the cell 1 may include an intermediate layer 7 between the solid electrolyte layer 6 and the air electrode 8.

As illustrated in FIG. 1B, the air electrode 8 does not extend to the lower end of the cell 1. At the lower end portion of the cell 1, only the solid electrolyte layer 6 is exposed on a surface of the flat surface n1. As illustrated in FIG. 1C, the interconnector 4 may extend to the lower end of the cell 1. At a lower end portion of the cell 1, the interconnector 4 and the solid electrolyte layer 6 are exposed on the surface. Note that, as illustrated in FIG. 1A, the solid electrolyte layer 6 is exposed at the surface at the pair of side surfaces m in a circular arc shape of the cell 1. The interconnector 4 need not extend to the lower end of the cell 1.

Hereinafter, each of constituent members constituting the cell 1 will be described.

The support substrate 2 includes gas-flow passages 2a, in which gas flows. The example of the support substrate 2 illustrated in FIG. 1A includes six gas-flow passages 2a. The support substrate 2 has gas permeability, and allows the gas flowing in the gas-flow passage 2a to permeate to the fuel electrode 5. The support substrate 2 may have electrical conductivity. The support substrate 2 having electrical conductivity causes electricity generated in the element portion to be collected in the interconnector 4.

The material of the support substrate 2 includes, for example, an iron group metal component and an inorganic oxide. The iron group metal component may be, for example, Ni (nickel) and/or NiO. The inorganic oxide may be, for example, a specific rare earth element oxide. The rare earth element oxide may contain, for example, one or more rare earth elements selected from Sc, Y, La, Nd, Sm, Gd, Dy, and Yb.

As the material of the fuel electrode 5, a commonly known material may be used. As the fuel electrode 5, a porous electrically conductive ceramic, for example, a ceramic containing ZrO₂ in which a calcium oxide, a magnesium oxide, or a rare earth element oxide is in solid solution, and Ni and/or NiO may be used. This rare earth element oxide may contain a plurality of rare earth elements selected from, for example, Sc, Y, La, Nd, Sm, Gd, Dy, and Yb. Hereinafter, ZrO₂ in which a calcium oxide, a magnesium oxide, or a rare earth element oxide is contained as a solid solution may be referred to as stabilized zirconia. Stabilized zirconia may include partially stabilized zirconia.

The solid electrolyte layer 6 is an electrolyte and delivers ions between the fuel electrode 5 and the air electrode 8. At the same time, the solid electrolyte layer 6 has gas blocking properties, and makes leakage of the fuel gas and the oxygen-containing gas less likely to occur.

The material of the solid electrolyte layer 6 may be, for example, ZrO₂ in which from 3 mole% to 15 mole% of a rare earth element oxide is in solid solution. The rare earth element oxide may contain, for example, one or more rare earth elements selected from Sc, Y, La, Nd, Sm, Gd, Dy, and Yb. The solid electrolyte layer 6 may contain, for example, ZrO₂ in which Yb, Sc, or Gd is in solid solution, CeO₂ in which La, Nd, or Yb is in solid solution, BaZrO₃ in which Sc or Yb is in solid solution, or BaCeO₃ in which Sc or Yb is in solid solution.

The air electrode 8 has gas permeability. The open porosity of the air electrode 8 may be, for example, in the range of from 20% to 50%, particularly in the range of from 30% to 50%. The open porosity of the air electrode 8 may also be referred to as the porosity of the air electrode 8.

The material of the air electrode 8 is not particularly limited, as long as the material is one generally used for the air electrode. The material of the air electrode 8 may be, for example, an electrically conductive ceramic such as a so-called ABO₃ type perovskite oxide.

The material of the air electrode 8 may be, for example, a composite oxide in which strontium (Sr) and lanthanum (La) coexist at the A site. Examples of such a composite oxide include La_{y}Sr₁₋ₓCo_{y}Fe_{1-y}O₃, LaₓSr₁₋ₓMnO₃, LaₓSr₁₋ₓFeO₃, and LaₓSr₁₋ₓCoO₃. Here, x is 0 < x < 1, and y is 0 < y < 1.

When the element portion 3 includes the intermediate layer 7, the intermediate layer 7 functions as a diffusion suppression layer. When strontium (Sr) contained in the air electrode 8 diffuses into the solid electrolyte layer 6, a resistance layer of SrZrO₃ is formed in the solid electrolyte layer 6. The intermediate layer 7 makes it difficult for Sr to diffuse, thereby making it difficult for SrZrO₃ to be formed.

A material of the intermediate layer 7 is not particularly limited as long as the material is one generally used to suppress diffusion of elements between the air electrode 8 and the solid electrolyte layer 6. The material of the intermediate layer 7 may contain, for example, cerium oxide (CeO₂) in which rare earth elements other than cerium (Ce) are in solid solution. As such rare earth elements, for example, gadolinium (Gd), samarium (Sm), or the like may be used.

The interconnector 4 is dense, and makes the leakage of the fuel gas flowing through the gas-flow passages 2a located inside the support substrate 2, and of the oxygen-containing gas flowing outside the support substrate 2 less likely to occur. The interconnector 4 may have a relative density of 93% or more; particularly 95% or more.

As the material of the interconnector 4, a lanthanum chromite-based perovskite oxide (LaCrO₃-based oxide), a lanthanum strontium titanium-based perovskite oxide (LaSrTiO₃-based oxide), or the like may be used. These materials have electrical conductivity, and are unlikely to be reduced and also unlikely to be oxidized even when brought into contact with a fuel gas such as a hydrogen-containing gas and an oxygen-containing gas such as air.

### Configuration of Electrochemical Cell Device

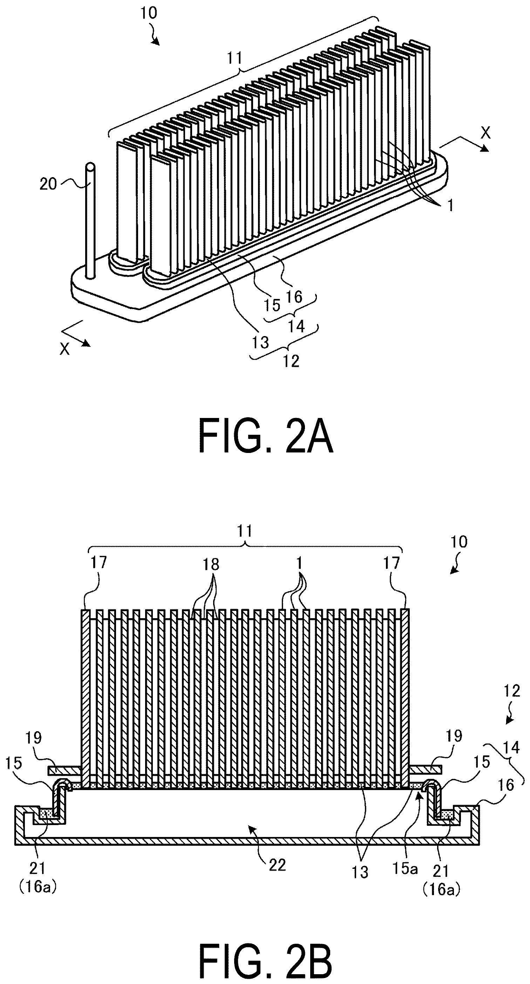

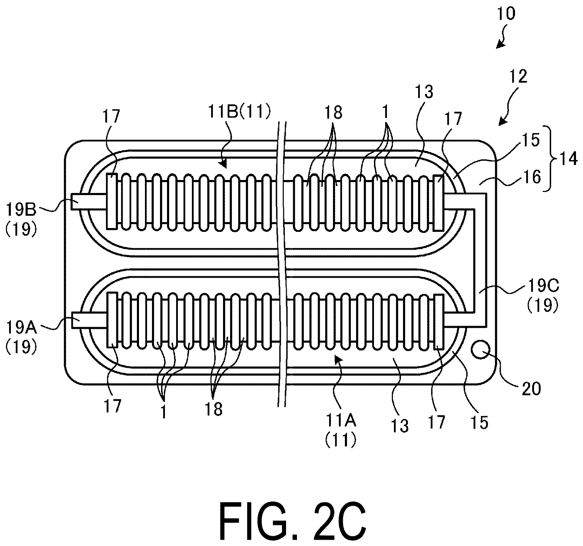

An electrochemical cell device according to the present embodiment using the cell 1 described above will be described with reference to FIGs. 2A to 2C. FIG. 2A is a perspective view illustrating an example of the electrochemical cell device according to the first embodiment, FIG. 2B is a cross-sectional view taken along a line X-X illustrated in FIG. 2A, and FIG. 2C is a top view illustrating an example of the electrochemical cell device according to the first embodiment.

As illustrated in FIG. 2A, a cell stack device 10 includes a cell stack 11 including a plurality of the cells 1 arrayed (stacked) in the thickness direction T (see FIG. 1A) of each cell 1, and a fixing member 12.

The fixing member 12 includes a fixing material 13 and a support member 14. The support member 14 supports the cells 1. The fixing material 13 fixes the cells 1 to the support member 14. The support member 14 includes a support body 15 and a gas tank 16. The support body 15 and the gas tank 16, constituting the support member 14, are made of metal and electrically conductive.

As illustrated in FIG. 2B, the support body 15 includes an insertion hole 15a, into which the lower end portions of the plurality of cells 1 are inserted. The lower end portions of the plurality of cells 1 and the inner wall of the insertion hole 15a are bonded by the fixing material 13.

The gas tank 16 includes an opening portion through which a reactive gas is supplied to the plurality of cells 1 via the insertion hole 15a, and a recessed groove 16a located in the periphery of the opening portion. The outer peripheral end portion of the support body 15 is bonded to the gas tank 16 by a bonding material 21, with which the recessed groove 16a of the gas tank 16 is filled.

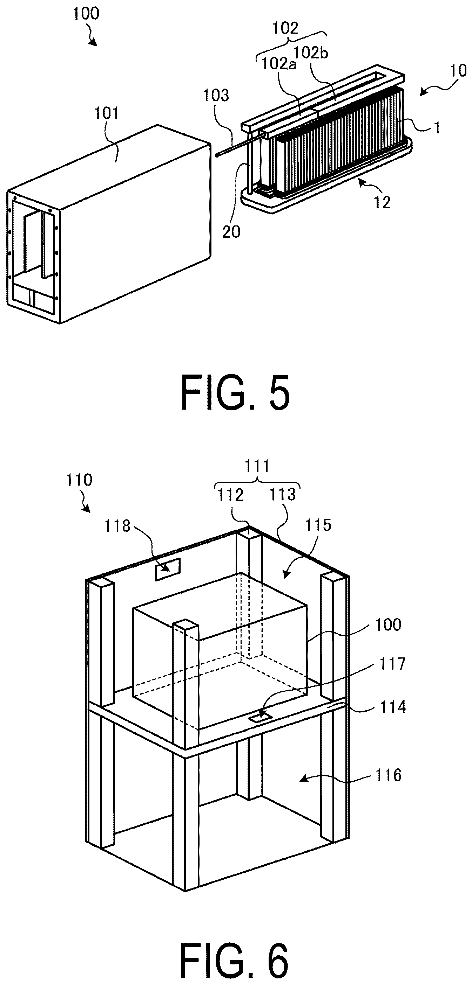

In the example illustrated in FIG. 2A, the fuel gas is stored in an internal space 22 formed by the support body 15 and the gas tank 16. The support body 15 and the gas tank 16 constitute the support member 14. The gas tank 16 includes a gas circulation pipe 20 connected thereto. The fuel gas is supplied to the gas tank 16 through the gas circulation pipe 20 and is supplied from the gas tank 16 to the gas-flow passages 2a (see FIG. 1A) inside the cells 1. The fuel gas supplied to the gas tank 16 is produced in a reformer 102 (see FIG. 5) which will be described later.

A hydrogen-rich fuel gas can be produced, for example, by steam-reforming a raw fuel. When the fuel gas is produced by steam reforming, the fuel gas contains steam.

The example illustrated in FIG. 2A includes two rows of cell stacks 11, two support bodies 15, and the gas tank 16. The two rows of the cell stacks 11 each have a plurality of cells 1. Each of the cell stacks 11 is fixed to a corresponding one of the support bodies 15. An upper surface of the gas tank 16 includes two through holes. Each of the support bodies 15 is disposed in a corresponding one of the through holes. The internal space 22 is formed by the one gas tank 16 and the two support bodies 15.

The insertion hole 15a has, for example, an oval shape in a top surface view. The length of the insertion hole 15a in an arrangement direction of the cells 1, that is, the thickness direction T, is longer than the distance between two end current collection members 17 located at two ends of the cell stack 11, for example. The width of the insertion hole 15a is, for example, greater than the length of the cell 1 in the width direction W (see FIG. 1A).

As illustrated in FIG. 2B, the joined portions between the inner wall of the insertion hole 15a and the lower end portions of the cells 1 are filled with the fixing material 13 and solidified. As a result, the inner wall of the insertion hole 15a and the lower end portions of the plurality of cells 1 are bonded and fixed, and the lower end portions of the cells 1 are bonded and fixed to each other. The gas-flow passages 2a of each of the cells 1 communicate, at the lower end portion, with the internal space 22 of the support member 14.

The fixing material 13 and the bonding material 21 may be of low electrical conductivity, such as glass. As the specific materials of the fixing material 13 and the bonding material 21, amorphous glass or the like may be used, and especially, crystallized glass or the like may be used.

As the crystallized glass, for example, any one selected from the group consisting of SiO₂-CaO-based, MgO-B₂O₃-based, La₂O₃-B₂O₃-MgO-based, La₂O₃-B₂O₃-ZnO-based, and SiO₂-CaO-ZnO-based materials may be used, or, in particular, a SiO₂-MgO-based material may be used.

As illustrated in FIG. 2B, electrically conductive members 18 are each interposed between adjacent ones of the cells 1 of the plurality of cells 1. Each of the electrically conductive members 18 electrically connects in series the fuel electrode 5 of one of the adjacent ones of the cells 1 with the air electrode 8 of the other one of the adjacent ones of the cells 1. More specifically, the electrically conductive member 18 connects the interconnector 4 electrically connected to the fuel electrode 5 of the one of the adjacent cells 1 and the air electrode 8 of the other one of the adjacent cells 1. The details of the electrically conductive member 18 connected between the adjacent cells 1 will be described later.

As illustrated in FIG. 2B, the end current collection members 17 are electrically connected to the cells 1 located at the outermost sides in the arrangement direction of the plurality of cells 1. The end current collection members 17 are each connected to an electrically conductive portion 19 protruding outward from the cell stack 11. The electrically conductive portion 19 collects electricity generated by the cells 1, and conducts the electricity to the outside. Note that in FIG. 2A, the end current collection members 17 are not illustrated.

As illustrated in FIG. 2C, in the cell stack device 10, two cell stacks 11A and 11B, which are connected in series, function as one battery. Thus, the electrically conductive portion 19 of the cell stack device 10 is divided into a positive electrode terminal 19A, a negative electrode terminal 19B, and a connection terminal 19C.

The positive electrode terminal 19A functions as a positive electrode when the electrical power generated by the cell stack 11 is output to the outside, and is electrically connected to the end current collection member 17 on a positive electrode side in the cell stack 11A. The negative electrode terminal 19B functions as a negative electrode when the electrical power generated by the cell stack 11 is output to the outside, and is electrically connected to the end current collection member 17 on a negative electrode side in the cell stack 11B.

The connection terminal 19C electrically connects the end current collection member 17 on the negative electrode side in the cell stack 11A and the end current collection member 17 on the positive electrode side in the cell stack 11B.

### Details of Electrically Conductive Member

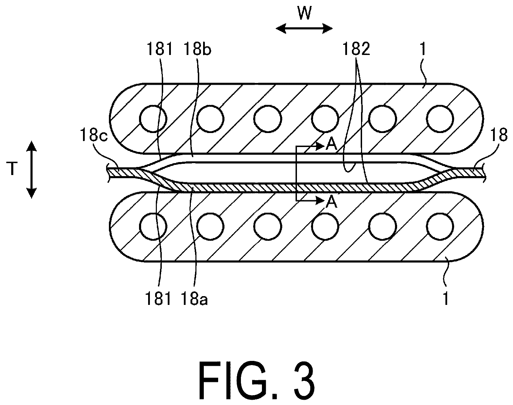

Details of the electrically conductive member 18 according to the first embodiment will be described with reference to FIG. 3 to FIG. 4B. FIG. 3 is a horizontal cross-sectional view illustrating an example of an electrically conductive member according to the first embodiment.

As illustrated in FIG. 3, the electrically conductive member 18 includes connecting portions 18a connected to one of the adjacent cells 1 and connecting portions 18b connected to the other one of the adjacent cells 1. The electrically conductive member 18 includes coupling portions 18c at both ends in the width direction W to connect the connecting portions 18a and 18b. This enables the electrically conductive member 18 to electrically connect the cells 1 adjacent to each other in the thickness direction T. Note that in FIG. 3, the shape of each cell 1 is illustrated by simplification.

Also, the connecting portions 18a and 18b each include a first surface 181 facing the cell 1 and a second surface 182 facing the connecting portions 18b and 18a.

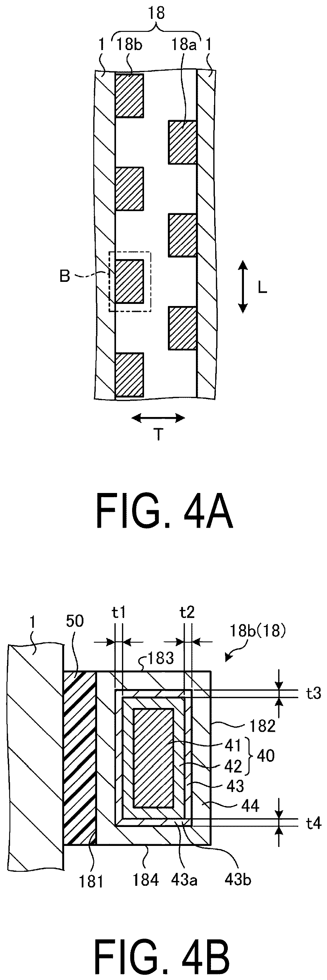

FIG. 4A is a cross-sectional view taken along a line A-A illustrated in FIG. 3. FIG. 4B is an enlarged view of a region B illustrated in FIG. 4A.

The electrically conductive member 18 extends in the length direction L of the cell 1. As illustrated in FIG. 4A, a plurality of the connecting portions 18a and 18b of the electrically conductive member 18 are alternately located along the length direction L of the cell 1. The electrically conductive member 18 is in contact with the cell 1 at each of the connecting portions 18a and 18b.

As illustrated in FIG. 4B, the electrically conductive member 18 includes a base member 40, a covering part 43, and a coating layer 44. The coating layer 44 has electrical conductivity. The electrically conductive member 18 has the first surface 181 and the second surface 182 that face each other with the base member 40 interposed therebetween. Also, the electrically conductive member 18 has the third surfaces 183 and 184 that connect the first surface 181 and the second surface 182.

The electrically conductive member 18 (connecting portion 18b) is bonded to the cell 1 via a bonding material 50. The bonding material 50 is located between the first surface 181 of the electrically conductive member 18 and the cell 1, and joins the electrically conductive member 18 and the cell 1. Also, the second surface 182 and the third surfaces 183 and 184 are exposed to, for example, an oxidizing atmosphere such as air.

The base member 40 has electrical conductivity and thermal resistance. The base member 40 contains chromium. The base member 40 is made of, for example, stainless steel. The base member 40 may contain, for example, a metal oxide.

The base member 40 may have a layered structure. In the example illustrated in FIG. 4B, the base member 40 includes a first base member layer 41 and a second base member layer 42. The second base member layer 42 may have a higher chromium content than the first base member layer 41, for example. The second base member layer 42 contains, for example, a chromium oxide (Cr₂O₃). In this way, the base member 40 includes the second base member layer 42, so that the durability of the electrically conductive member 18 is enhanced. Note that the base member 40 may or may not have the second base member layer 42 partially. The base member 40 may have a further layered structure.

The covering part 43 is located on the base member 40. The covering part 43 is located between the base member 40 and the coating layer 44. The covering part 43 contains a first element 43a and a second element 43b. The covering part 43 contains Ce and Fe. The first element 43a has a smaller first ionization energy than chromium and a small free energy of formation of oxide per mole of oxygen than chromium. Examples of the first element 43a include Eu, Pr, Zr, and the like in addition to Ce. The free energy of formation is also called Gibbs energy of formation. The free energy of formation can be confirmed in, for example, a thermodynamic database such as "Thermodynamic Database for Nuclear Fuels and Reactor Materials". The first element 43a may be located on the base member 40 as an oxide of such an element. Examples of the oxide of the first element 43a include CeO₂, EuO, PrO₂, and ZrO₂. Hereinafter, the oxide of the first element 43a is referred to as a first oxide.

Examples of the second element 43b include Ni, Ti, Si, Al, Mn, Co, and the like, other than Fe. Examples of the oxide of such a second element 43b include NiO, TiO₂, SiO₂, Al₂O₃, MnO₂, Mn₂O₃ and/or Mn₃O₄, and CoO and/or Co₂O₃. Hereinafter, the oxide of the second element 43b is referred to as a second oxide.

The covering part 43 may be a coating film containing the first element 43a and the second element 43b, and covering the base member 40. The covering part 43 may be one coating film covering the entire base member 40, or may be located on the base member 40 as a mesh-like coating film or coating film with a plurality of islands separated from each other. The covering part 43 contains one or more of the first elements 43a. The covering part 43 contains one or more of the second elements 43b. The covering part 43 may contain an element other than the first element 43a and the second element 43b. The covering part 43 contains the first oxide in which the second element 43b is in solid solution.

The covering part 43 can be formed on the surface of the base member 40 by, for example, a film formation method such as an ion-beam assisted deposition (IAD) method, a metal organic decomposition (MOD) method, a sputtering method, an aerosol deposition (AD) method, and a pulsed laser deposition (PLD) method.

The covering part 43 containing the first element 43a and the second element 43b may be crystalline or amorphous. Also, a crystalline phase and an amorphous phase may be mixed in the covering part 43. The covering part 43 may have a region containing the first element 43a and a region containing the second element 43b.

Thus, by having the covering part 43 located on the base member 40 of the electrically conductive member 18 and containing the first element 43a and the second element 43b, the second base member layer 42 is less likely to grow, and the electrically conductive member 18 can reduce an increase in the internal resistance associated with the growth of the second base member layer 42. This can reduce a decrease in the power generation capability of the cell 1.

Also, the thickness of the covering part 43 may be, for example, 5 nm or more and 150 nm or less, 10 nm or more and 130 nm or less, or further 20 nm or more and 100 nm or less. Since the covering part 43 has such a thickness, for example, the second base member layer 42 is less likely to grow, and the effect of the covering part 43 on the internal resistance is reduced, even when the covering part 43 has a small conductivity. Thus, the electrically conductive member 18 can reduce the increase in the internal resistance. This can reduce a decrease in the power generation capability of the cell 1. For example, the conductivity of Cr₂O₃ is 1.5 S/m and the conductivity of CeO₂ is 0.07 S/m. When the electrically conductive member is made of the base member 40 alone, or the electrically conductive member with the coating layer 44 described below formed directly on the base member 40, is used at the operating temperature of the fuel cell, the thickness of the second base member layer 42 is about several µm, for example, 4 µm. On the other hand, when the electrically conductive member 18 having the covering part 43 on the base member 40 is used at the operating temperature of the fuel cell, the thickness of the second base member layer 42 is 1 µm or less. Specifically, for example, in the electrically conductive member 18 having CeO₂ with a thickness of 10 nm as a coating film, the thickness of the second base member layer 42 is about 0.8 µm, which reduces the internal resistance to be smaller than the internal resistance of the case without the coating film. When CeO₂ in the covering part 43 also contains Fe, the increase in the internal resistance of the electrically conductive member 18 can further be reduced. For example, compared to the electrically conductive member 18 without the covering part 43, the increase in the internal resistance is about 1/2 for the electrically conductive member 18 with the covering part 43 containing CeO₂, and the increase in the internal resistance is about 1/3 for the electrically conductive member 18 containing Fe and CeO₂.

The presence or absence of the first element 43a and the second element 43b and the size of the covering part 43 containing the first element 43a and the second element 43b can be confirmed, for example, by mapping the first element 43a and the second element 43b in the cross section of the electrically conductive member 18 using a high-angle annular dark-field scanning transmission electron microscope (HAADF-STEM), a focused ion beam-scanning electron microscope (FIB-SEM), or an electron probe micro analyzer (EPMA). The average thickness of the coating film described below is obtained, for example, by mapping the above elements in the cross section of the electrically conductive member 18 using a HAADF-STEM with an acceleration voltage of 200 kV at a magnification of one million times, measuring the thickness at more than 10 points of the area where the first and second elements 43a and 43b are detected, and calculating the average value of the thickness.

An average thickness t1 of coating films located between the first surface 181 and the base member 40 of the electrically conductive member 18 may be the same as or different from an average thickness t3 of coating films located between the third surface 183 and the base member 40 and an average thickness t4 of coating films located between the third surface 184 and the base member 40. The average thickness t1 as a first average thickness may be greater than the average thicknesses t3 and t4 as second average thicknesses. Thus, by making the average thickness t1 greater than the average thicknesses t3, t4, the second base member layer 42 is less likely to grow at a location close to the first surface 181 where the current flows. The average thicknesses t3 and t4 may be less than 5 nm, for example. Also, the electrically conductive member 18 may have no coating film in at least one of between the third surface 183 and the base member 40 and between the third surface 184 and the base member 40. Since current may not flow easily at a place close to the third surfaces 183 and 184, the second base member layer 42 may be thicker than at the place close to the first surface 181. Since the electrically conductive member 18 has a thicker second base member layer 42 at a location close to the third surfaces 183, 184 than at a location close to the first surface 181, the oxidation of the base member 40 is less likely to occur. This can reduce a decrease in the power generation capability of the cell 1.

The average thicknesses t3 and t4 may be greater than the average thickness t1, for example, greater than 150 nm. Since current may not flow easily at the place close to the third surfaces 183 and 184, the average thickness t3 and t4 may be large in this way. Thus, since the average thicknesses t3, t4 are greater than the average thickness t1, the second base member layer 42 is less likely to grow on the third surfaces 183, 184, and the release of chromium contained in the base member 40 is suppressed. The average thickness t2 of the coating film located between the second surface 182 and the base member 40 of the electrically conductive member 18 may be greater or smaller than the average thicknesses t3 and t4.

A first area ratio, which is an area ratio of the covering part 43 located between the first surface 181 and the base member 40, may be the same as or different from a second area ratio which is an area ratio of the covering part 43 located between the third surfaces 183 and 184 and the base member 40. The first area ratio may be greater than the second area ratio. Thus, by making the first area ratio greater than the second area ratio, the second base member layer 42 at a location close to the first surface 181 where current flows is less likely to grow. The first area ratio may be, for example, 20 area% or more and 100 area% or less. The second area ratio may be, for example, 0 area% or more and 100 area% or less. An area ratio of the covering part 43 located between the second surface 182 and the base member 40 may be greater than or smaller than the second area ratio.

Each of the area ratios mentioned above can be calculated as follows, for example. First, the cross section of the electrically conductive member 18 is polished, and the first element 43a and the second element 43b on the base member 40 are mapped using the HAADF-STEM, the focused ion beam-scanning electron microscope (FIB-SEM), or the electron probe micro analyzer (EPMA). Specifically, the HAADF-STEM with an acceleration voltage of 200 kV, for example, is used to obtain the mapping image of the first element 43a and the mapping image of the second element 43b at a magnification of, for example, from 3000x to 5000x in the cross section of the electrically conductive member 18. The obtained mapping image is subjected to image analysis using the analysis software Igor manufactured by HULINK Inc. to calculate the area ratios of the first element 43a and the second element 43b overlapping the base member 40 and the area ratio of an overlap between the first element 43a and the second element 43b, when viewed from the normal direction of each surface. The area ratio of the overlap between the first element 43a and the second element 43b is subtracted from the sum of the obtained area ratios of the first element 43a and the second element 43b to provide the area ratio of the covering part 43. That is, when the area ratio of the first element 43a overlapping the base member 40 is A, the area ratio of the second element 43b overlapping the base member 40 is B, and the area ratio of the overlap between the first element 43a and the second element 43b is C, then the area ratio of the covering part 43 is A+B-C. Note that each of the above area ratios may be the average of three area ratios obtained by measuring cross sections at any three locations in each region, for example.

The coating layer 44 covers the covering part 43 over the thickness direction T and the length direction L of the entire cell 1. The coating layer 44 contains an element different from that of the covering part 43. The coating layer 44 is located between the base member 40 and the oxidizing atmosphere, which makes it possible to suppress the release of chromium contained in the base member 40, for example. Therefore, the durability of the electrically conductive member 18 is improved, so that the durability of the cell 1 can be improved.

Also, the coating layer 44 may contain an oxide containing, for example, manganese (Mn) and cobalt (Co). Hereinafter, the oxide containing Mn and Co is referred to as a third oxide. The third oxide has electron conductivity. The third oxide has a higher electrical conductivity than Cr₃O₃ and the first oxide. The third oxide may have a higher electrical conductivity, for example, 100 times higher than the electrical conductivity of Cr₃O₃. The molar ratio of Mn contained in the third oxide may be greater than the molar ratio of Co. The coating layer 44 may contain, for example, the third oxide having a molar ratio of Mn, Co, and O of 1.66:1.34:4. By containing the third oxide having such a composition, the durability of the electrically conductive member 18 can be increased, for example, as compared with the coating layer 44 containing the third oxide having a molar ratio of Mn, Co, and O of 1.5:1.5:4. The molar ratio of Mn, Co, and O can be calculated on the basis of the identification of a crystal phase using an X-ray diffractometer (XRD). The third oxide may also contain an element other than Mn and Co, such as zinc (Zn), iron (Fe), and aluminum (Al). The coating layer 44 may contain the first element 43a or may contain the second element 43b. The coating layer 44 may not contain the first element 43a and the second element 43b. When the coating layer 44 contains the first element 43a, the content of the first element 43a in the coating layer 44 may be smaller than the content of the first element 43a in the covering part 43. When the coating layer 44 contains the second element 43b, the content of the second element 43b in the coating layer 44 may be either smaller or greater than the content of the second element 43b in the covering part 43.

Also, the coating layer 44 may be porous. The coating layer 44 may have a porosity of, for example, from 5% to 40%. When the electrically conductive member 18 includes the porous coating layer 44 in this way, stress applied to the electrically conductive member 18 from the outside can be relieved. Therefore, the durability of the electrically conductive member 18 is improved, so that the durability of the cell 1 can be improved.

The coating layer 44 can be formed by, for example, a thermal spraying method, a vapor deposition method, an electrodeposition method, a sputtering method, or the like. For example, a coating material may be coated on the covering part 43 or the surface of the coating film, and then fired to form the coating layer 44.

### Module

A module according to an embodiment of the present disclosure using the cell stack device 10 described above will be described with reference to FIG. 5. FIG. 5 is an exterior perspective view illustrating an example of a module according to the first embodiment. FIG. 5 illustrates a state in which the front and rear surfaces, which constitute part of a storage container 101, are removed, and the fuel cell stack device 10 of the fuel cell stored inside is taken out rearward.

As illustrated in FIG. 5, the module 100 includes the storage container 101, and the cell stack device 10 housed in the storage container 101. The reformer 102 is disposed above the cell stack device 10.

The reformer 102 generates a fuel gas by reforming a raw fuel such as natural gas and kerosene, and supplies the fuel gas to the cell 1. The raw fuel is supplied to the reformer 102 through a raw fuel supply pipe 103. Note that the reformer 102 may include a vaporizing unit 102a for vaporizing water and a reforming unit 102b. The reforming unit 102b includes a reforming catalyst (not illustrated) for reforming the raw fuel into a fuel gas. Such a reformer 102 can perform steam reforming, which is a highly efficient reformation reaction.

The fuel gas generated by the reformer 102 is supplied to the gas-flow passages 2a (see FIG. 1A) of the cell 1 through the gas circulation pipe 20, the gas tank 16, and the support member 14.

In the module 100 having the configuration mentioned above, the temperature in the module 100 during normal power generation is about from 500°C to 1000°C due to combustion of gas and power generation by the cell 1.

In such a module 100, as described above, the module 100 that reduces the decrease in the power generation performance can be provided by housing the cell stack device 10 including the plurality of cells 1 that reduce the decrease in the power generation capability.

### Module Housing Device

FIG. 6 is an exploded perspective view illustrating an example of a module housing device according to the first embodiment. A module housing device 110 according to the present embodiment includes an external case 111, the module 100 illustrated in FIG. 5, and an auxiliary device (not illustrated). The auxiliary device operates the module 100. The module 100 and the auxiliary device are housed in the external case 111. Note that in FIG. 6, the configuration is partially omitted.

The external case 111 of the module housing device 110 illustrated in FIG. 6 includes a support 112 and an external plate 113. A dividing plate 114 vertically partitions the interior of the external case 111. The space above the dividing plate 114 in the external case 111 is a module housing chamber 115 for housing the module 100. The space below the dividing plate 114 in the external case 111 is an auxiliary device housing chamber 116 for housing the auxiliary device configured to operate the module 100. Note that in FIG. 6, the auxiliary device housed in the auxiliary device housing chamber 116 is omitted.

The dividing plate 114 includes an air circulation hole 117 for causing air in the auxiliary device housing chamber 116 to flow into the module housing chamber 115 side. The external plate 113 constituting the module housing chamber 115 includes an exhaust hole 118 for discharging air inside the module housing chamber 115.

In such a module housing device 110, as described above, the module housing device 110 that can reduce the decrease in the power generation capability is provided by having the module 100 that reduces the power generation capability in the module housing chamber 115.

Note that, in the embodiment described above, the case where the support substrate of the hollow flat plate-shaped is used has been exemplified; however, the embodiment can also be applied to a cell stack device using a cylindrical support substrate.

### Second Embodiment

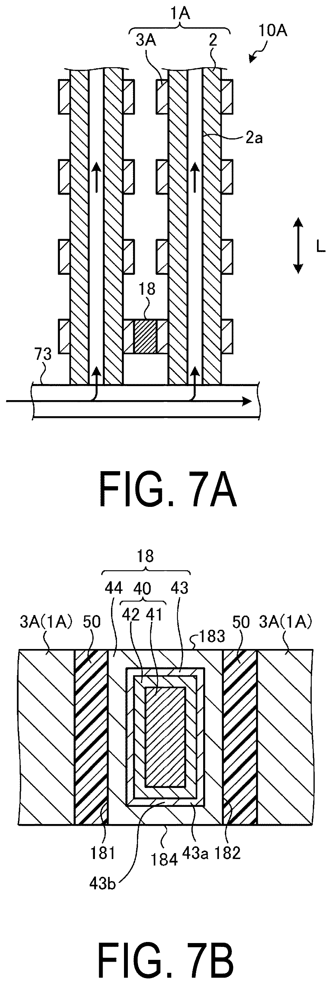

An electrochemical cell and an electrochemical cell device according to a second embodiment will be described with reference to FIGs. 7A and 7B.

In the embodiment described above, a so-called "vertically striped type" cell stack device, in which only one element portion including a fuel electrode, a solid electrolyte layer, and an air electrode is provided on the surface of the support substrate, is exemplified. However, the present disclosure can be applied to a horizontally striped type cell stack device with an array of so-called "horizontally striped type" cells, in which a plurality of element portions are provided on the surface of a support substrate at mutually separated locations, and adjacent element portions are electrically connected to each other.

FIG. 7A is a cross-sectional view illustrating an example of an electrochemical cell according to a second embodiment. In a cell stack device 10A, a plurality of cells 1A extend in the length direction L from a pipe 73 through which a fuel gas flows. Each cell 1A includes a plurality of element portions 3A on the support substrate 2. A gas-flow passage 2a, through which a gas from the pipe 73 flows, is provided inside the support substrate 2. The element portions 3A on the support substrate 2 are electrically connected by a connection layer (not illustrated). The plurality of cells 1A are electrically connected to each other via the electrically conductive member 18. The electrically conductive member 18 is located between the element portions 3A of each cell 1A and electrically connects adjacent cells 1A to each other. Specifically, a current collector or an interconnector electrically connected to an air electrode of the element portion 3A of one of the adjacent cells 1A is electrically connected to a current collector or an interconnector electrically connected to a fuel electrode of the element portion 3A of the other one of the adjacent cells 1A.

FIG. 7B is an enlarged cross-sectional view of the electrically conductive member according to the second embodiment. As illustrated in FIG. 7B, the electrically conductive member 18 is bonded, via the bonding material 50, to each of the cells 1A adjacent to each other. The conductive member 18 has the first surface 181 and the second surface 182 that face each other with the base member 40 interposed therebetween. Also, the electrically conductive member 18 has the third surfaces 183 and 184 that connect the first surface 181 and the second surface 182.

The electrically conductive member 18 is bonded to the cell 1A via the bonding material 50. The bonding material 50 is positioned between the first surface 181 of the electrically conductive member 18 and the element portion 3A of one cell 1A and between the second surface 182 of the electrically conductive member 18 and the element portion 3A of the other cell 1A, and joins a pair of the cells 1A facing each other with the electrically conductive member 18 interposed therebetween and the electrically conductive member 18. Also, the third surfaces 183 and 184 are exposed to, for example, an oxidizing atmosphere such as air.

The electrically conductive member 18 includes the base member 40, the covering part 43, and the coating layer 44. The base member 40 includes the first base member layer 41 and the second base member layer 42. Each part constituting the electrically conductive member 18 can be made of, for example, a material as used for the electrically conductive member 18 according to the first embodiment mentioned above.

The covering part 43 is located on the base member 40. The covering part 43 is located between the base member 40 and the coating layer 44. The covering part 43 contains the first element 43a and the second element 43b. The first element 43a is one or more elements having a smaller first ionization energy than chromium and a smaller free energy of formation of oxide per mole of oxygen than chromium. The second element 43b is Fe. The covering part 43 may contain, for example, two or more of the first elements 43a and/or two or more of the second elements 43b. The covering part 43 contains a first oxide that is an oxide of the first element 43a. The covering part 43 may contain a second oxide that is an oxide of the second element 43b. The covering part 43 may also be a coating film covering the base member 40. The covering part 43contains CeO₂ and Fe.

The covering part 43 may be a coating film containing the first element 43a and the second element 43b and covering the base member 40. The covering part 43 may be one coating film covering the entire base member 40, or may be located on the base member 40 as a mesh-like coating film or coating film with a plurality of islands separated from each other. The covering part 43 may contain, for example, one or more of the first elements 43a. The covering part 43 may contain, for example, one or more of the second elements 43b. The covering part 43 may contain an element other than the first element 43a and the second element 43b. The covering part 43 contains the first oxide in which the second element 43b is in solid solution.

Thus, since the electrically conductive member 18 includes the covering part 43 located on the base member 40 and containing the first element 43a and the second element 43b, the second base member layer 42 is less likely to grow, and the electrically conductive member 18 can reduce the increase in the internal resistance associated with the growth of the second base member layer 42. This can reduce the decrease in the power generation capability of the cell 1A, and thus reduce the decrease in the power generation capability of the cell stack device 10A.

### Third Embodiment

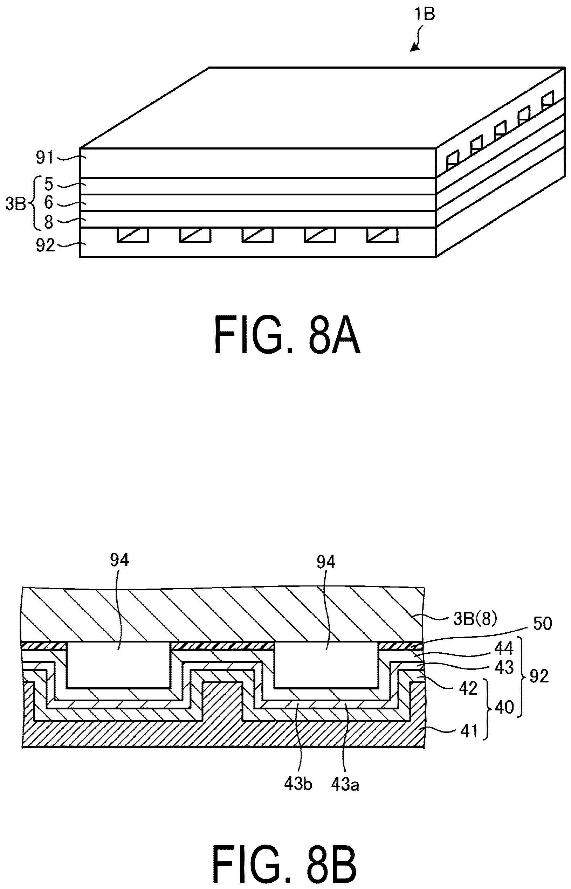

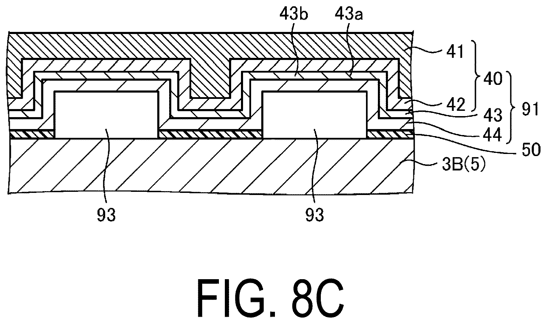

FIG. 8A is a perspective view illustrating an example of an electrochemical cell according to a third embodiment. FIGs. 8B and 8C are partial cross-sectional views of the electrochemical cell illustrated in FIG. 8A. The cell 1B according to the present embodiment is an example of a so-called flat plate cell.

As illustrated in FIG. 8A, a cell 1B includes an element portion 3B in which the fuel electrode 5, the solid electrolyte layer 6, and the air electrode 8 are layered. In an electrochemical cell device in which a plurality of flat plate cells are layered, for example, a plurality of cells 1B are electrically connected by electrically conductive members 91 and 92, which are metal layers adjacent to each other. The electrically conductive members 91 and 92 electrically connect adjacent ones of the cells 1B to each other, and each include gas-flow passages for supplying gas to the fuel electrode 5 or the air electrode 8.

As illustrated in FIG. 8B, in the present embodiment, the electrically conductive member 92 includes gas-flow passages 94 for supplying a gas to the air electrode 8. The electrically conductive member 92 is bonded to the element portion 3B (air electrode 8) via the bonding material 50. Note that the electrically conductive member 92 may be in direct contact with the element portion 3B without the intervention of the bonding material 50. In other words, in the present embodiment, the electrically conductive member 92 may be directly connected to the element portion 3B without using the bonding material 50.

The electrically conductive member 92 includes the base member 40, the covering part 43 containing the first element 43a, and the coating layer 44. The base member 40 includes the first base member layer 41 and the second base member layer 42. Each part constituting the electrically conductive member 92 can be made of, for example, a material as used for the electrically conductive member 18 mentioned above.

As illustrated in FIG. 8C, in the present embodiment, the electrically conductive member 91 includes gas-flow passages 93 for supplying a gas to the fuel electrode 5. The electrically conductive member 91 is bonded to the element portion 3B (fuel electrode 5) via the bonding material 50. The electrically conductive member 91 may be in direct contact with the element portion 3B without the intervention of the bonding material 50. In other words, the electrically conductive member 91 may be directly connected to the element portion 3B without using the bonding material 50.

The electrically conductive member 91 includes the base member 40, the covering part 43 containing the first element 43a, and the coating layer 44. The base member 40 includes the first base member layer 41 and the second base member layer 42. Each part constituting the electrically conductive member 91 can be made of, for example, a material as used for the electrically conductive member 92 (electrically conductive member 18) mentioned above.

The covering part 43 is located on the base member 40. The covering part 43 may be located between the base member 40 and the coating layer 44. The covering part 43 contains the first element 43a and the second element 43b. The first element 43a is one or more elements having a smaller first ionization energy than chromium and a smaller free energy of formation of oxide per mole of oxygen than chromium. The second element 43b is Fe. The covering part 43 may contain, for example, two or more of the first elements 43a and/or two or more of the second elements 43b. The covering part 43 contains a first oxide that is an oxide of the first element 43a. The covering part 43 may contain a second oxide that is an oxide of the second element 43b. The covering part 43 may also be a coating film covering the base member 40. The covering part 43 contains CeO₂ and Fe.

The covering part 43 may be a coating film containing the first element 43a and the second element 43b, and covering the base member 40. The covering part 43 may be one coating film covering the entire base member 40, or may be located on the base member 40 as a mesh-like coating film or coating film with a plurality of islands separated from each other. The covering part 43 may contain, for example, one or more of the first elements 43a. The covering part 43 may contain, for example, one or more of the second elements 43b. The covering part 43 may contain an element other than the first element 43a and the second element 43b. The covering part 43 contains the first oxide in which the second element 43b is in solid solution.

Thus, since the electrically conductive member 18 includes the covering part 43 located on the base member 40 and containing the first element 43a and the second element 43b, the second base member layer 42 is less likely to grow, and the electrically conductive member 18 can reduce the increase in the internal resistance associated with the growth of the second base member layer 42. This can reduce the decrease in the power generation capability of the cell 1B, and thus reduce the decrease in the power generation capability of the electrochemical cell device.

Note that although both of the electrically conductive members 91, 92 are described as having the coating layer 44 with reference to FIGs. 8B and 8C, one or both of the electrically conductive members 91, 92 need not have the coating layer 44. That is, the base member 40 or the covering part 43 may be in contact with the gas supplied to the fuel electrode 5 or the air electrode 8. In the present embodiment, both of the electrically conductive members 91, 92 are described as having corresponding covering parts 43, but one of the electrically conductive members 91, 92 need not have the covering part 43.

### Fourth Embodiment

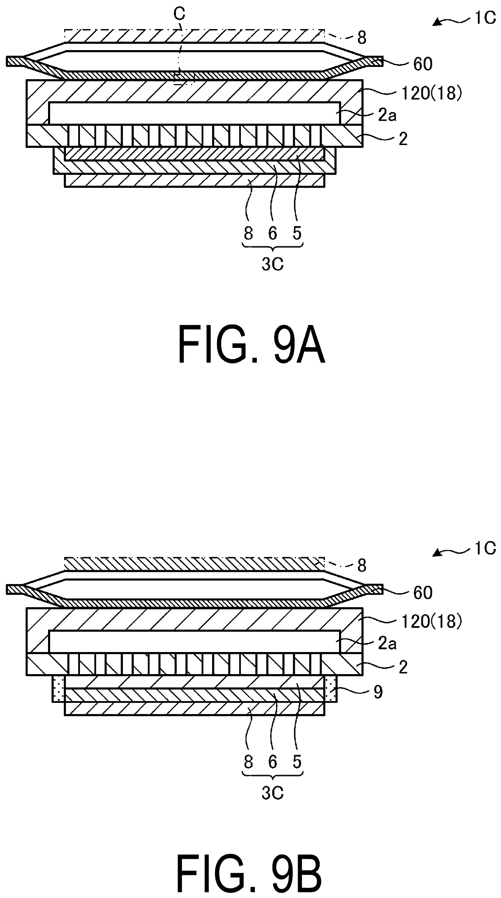

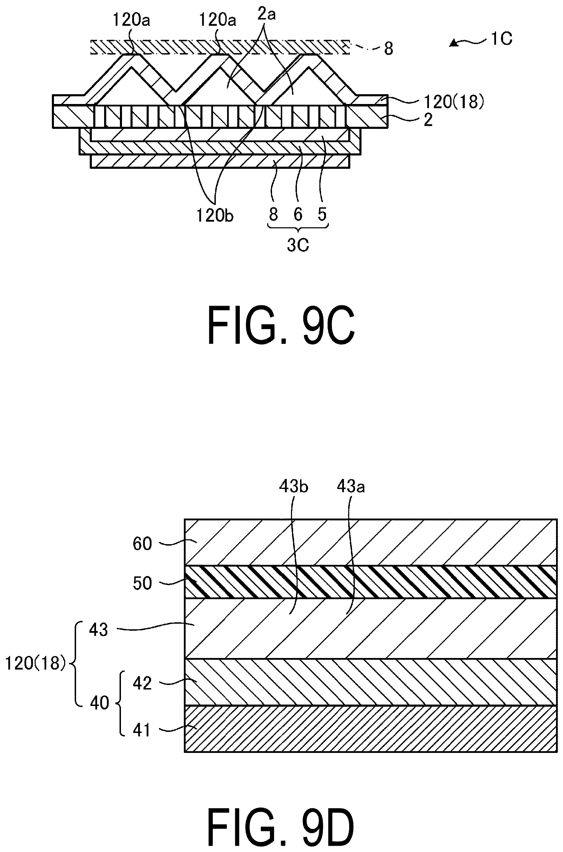

FIG. 9A is a horizontal cross-sectional view illustrating an example of an electrochemical cell according to a fourth embodiment. FIGs. 9B and 9C are horizontal cross-sectional views illustrating other examples of the electrochemical cell according to the fourth embodiment. FIG. 9D is an enlarged view of a region C illustrated in FIG. 9A. Note that FIG. 9D can also be applied to the examples in FIGs. 9B and 9C.

As illustrated in FIG. 9A, a cell 1C includes an element portion 3C in which the fuel electrode 5, the solid electrolyte layer 6, and the air electrode 8 are layered, and the support substrate 2. The support substrate 2 includes through holes or fine holes at a portion in contact with the fuel electrode 5 of the element portion 3, and has a member 120 located outside the gas-flow passage 2a. The support substrate 2 allows gas to flow between the gas-flow passage 2a and the element portion 3C. The support substrate 2 may be made of, for example, one or more metal plates. A material of the metal plate may contain chromium. The metal plate may include an electrically conductive coating layer. The support substrate 2 is an electrically conductive member that electrically connects adjacent ones of the cells 1C to each other. The element portion 3C may be directly formed on the support substrate 2 or may be bonded to the support substrate 2 by a bonding material.

In the example illustrated in FIG. 9A, the side surface of the fuel electrode 5 is covered with the solid electrolyte layer 6 to hermetically seal the gas-flow passage 2a through which the fuel gas flows. As illustrated in FIG. 9B, the side surface of the fuel electrode 5 may be covered and sealed with a dense sealing material 9. The sealing material 9 covering the side surface of the fuel electrode 5 may have electrical insulation properties. The sealing material 9 may be made of a material like glass or ceramic.

The gas-flow passage 2a of the support substrate 2 may be formed using a member 120 having unevenness as illustrated in FIG. 9C.

In the fourth embodiment, the member 120 is bonded to the air electrode 8 of another adjacent cell 1C via another electrically conductive member such as an inter-cell connecting member 60 and the bonding material 50. Note that the member 120 may be in direct contact with the air electrode 8 of the other adjacent cell 1C without the intervention of other electrically conductive members.

As illustrated in FIG. 9D, the member 120 includes the base member 40 and the covering part 43. The base member 40 includes the first base member layer 41 and the second base member layer 42. Each part constituting the member 120 can be made of, for example, a material such as that of the electrically conductive member 18 described above. Although not illustrated in detail, the inter-cell connecting member 60 may also be the electrically conductive member 18 including the base member 40 and the covering part 43.

The covering part 43 is located on the base member 40. The covering part 43 contains the first element 43a and the second element 43b. The first element 43a is one or more elements having a smaller first ionization energy than chromium and a smaller free energy of formation of oxide per mole of oxygen than chromium. The second element 43b is Fe,. The covering part 43 may contain, for example, two or more of the first elements 43a and/or two or more of the second elements 43b. The covering part 43 contains a first oxide that is an oxide of the first element 43a. The covering part 43 may contain a second oxide that is an oxide of the second element 43b. The covering part 43 may also be a coating film covering the base member 40. The covering part 43 contains CeO₂ and Fe.

The covering part 43 may be a coating film containing the first element 43a and the second element 43b and covering the base member 40. The covering part 43 may be one coating film covering the entire base member 40, or may be located on the base member 40 as a mesh-like coating film or a coating film with a plurality of islands separated from each other. The covering part 43 may contain, for example, one or more of the first elements 43a. The covering part 43 may contain, for example, one or more of the second elements 43b. The covering part 43 may contain an element other than the first element 43a and the second element 43b. The covering part 43 contains the first oxide in which the second element 43b is in solid solution.

Thus, since the member 120 includes the covering part 43 located on the base member 40 of the member 120 and containing the first element 43a and the second element 43b, the second base member layer 42 is less likely to grow, and the member 120 can reduce the increase in the internal resistance associated with the growth of the second base member layer 42. This can reduce the decrease in the power generation capability of the cell 1C, and thus reduce the decrease in the power generation capability of the cell stack device 10C.

In the present embodiment, the covering part 43 containing the first element 43a and the second element 43b may be formed only on a part of the member 120. For example, in the example illustrated in FIG. 9C, the covering part 43 may be provided only on a first portion 120a facing the air electrode 8 of another cell 1C and a second portion 120b facing the support substrate 2. The support substrate 2 may have the covering part 43 at a portion facing the fuel electrode 5 of the cell 1C.

### Other Embodiments

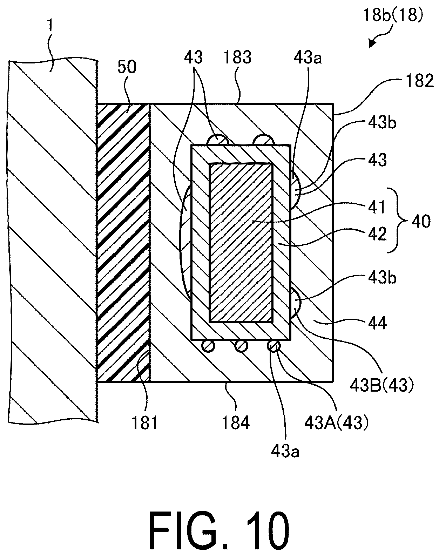

FIG. 10 is a cross-sectional view illustrating another example of the electrochemical cell according to the first embodiment. As illustrated in FIG. 10, the electrically conductive member 18 may have a plurality of particles located on the base member 40 as the covering part 43. The covering part 43 such as that described above may contain the first element 43a and the second element 43b. The covering part 43 may include a plurality of particles having different sizes, or may include a coating film partially covering the base member 40 and a plurality of particles. Thus, the plurality of particles and the coating film containing the first element 43a and the second element 43b are collectively referred to as the covering part 43.

The covering part 43 may include, for example, a first covering part 43A containing the first element 43a and not containing the second element 43b. The covering part 43 may include, for example, a second covering part 43B containing the second element 43b and not containing the first element 43a. When the covering part 43 includes the coating film containing the first element 43a and the second element 43b and the first covering part 43A and/or the second covering part 43B, the first covering part 43A and/or the second covering part 43B may be located on the base member 40 or may be located on the coating film.

Although not illustrated, the electrically conductive member 18 may include the covering part 43 illustrated in FIG. 10 instead of or in addition to the coating film which is an example of the covering part 43 included in the cells 1A to 1C according to the second to fourth embodiments.

### Other Embodiments

An electrochemical cell device according to other embodiments will be described.

In the above embodiments, a fuel cell, a fuel cell stack device, a fuel cell module, and a fuel cell device are illustrated as examples of the "electrochemical cell", the "electrochemical cell device", the "module", and the "module housing device"; they may also be an electrolytic cell, an electrolytic cell stack device, an electrolytic module, and an electrolytic device, respectively, as other examples. The electrolytic cell includes a first electrode layer and a second electrode layer, and decomposes water vapor into hydrogen and oxygen or decomposes carbon dioxide into carbon monoxide and oxygen by supplying electric power. Although an oxide ion conductor or a hydrogen ion conductor is given as an example of the electrolyte material of the electrochemical cell in the above embodiment, the electrolyte material may be a hydroxide ion conductor. According to the electrolytic cell, electrolytic cell stack device, electrolytic module, and electrolytic device discussed above, electrolytic performance can be improved.

While the present disclosure has been described in detail, the present disclosure is not limited to the aforementioned embodiment, and various changes, improvements, and the like can be made without departing from the scope of the invention as defined by the claims.

As described above, the electrically conductive member 18 according to the embodiment includes the base member 40 and the covering part 43 located on the base member 40 and containing the first element 43a and the second element 43b. The base member 40 contains chromium. The first element 43a is one or more elements having a smaller first ionization energy than chromium and a smaller free energy of formation of oxide per mole of oxygen than chromium. The second element 43b is Fe. This can reduce an increase in internal resistance of the electrically conductive member 18.

The electrochemical cell (cell 1) according to the embodiment includes the element portion 3 and the electrically conductive member 18 mentioned above. The electrically conductive member 18 is connected to the element portion 3. This can provide the cell 1 that reduces the decrease in the cell performance associated with the increase in the internal resistance.

The electrochemical cell device (cell stack device 10) according to the embodiment includes the cell stack 11 including the electrochemical cells described above. This can provide the cell stack device 10 that reduces the decrease in performance associated with the increase in the internal resistance.

The module 100 according to the embodiment includes the electrochemical cell device described above, and a storage container 101 that houses the electrochemical cell device. This can provide the module 100 that reduces the decrease in performance associated with the increase in the internal resistance.

The module housing device 110 according to embodiment includes the module 100 described above, an auxiliary device configured to operate the module 100, and the external case 111 configured to accommodate the module 100 and the auxiliary device. This can provide the module housing device 110 that reduces the decrease in performance associated with the increase in the internal resistance.

### REFERENCE SIGNS

1, 1A, 1B, 1C Cell
3, 3A, 3B, 3C Element portion
5 Fuel electrode
6 Solid electrolyte layer
7 Intermediate layer
8 Air electrode
10 Cell stack device
11 Cell stack
12 Fixing member
13 Fixing material
14 Support member
15 Support body
16 Gas tank
17 End current collection member
18 Electrically conductive member
40 Base member
43 Covering part
100 Module
110 Module housing device

## Claims

1. An electrically conductive member (18), comprising:
a base member (40) containing chromium; and
a covering part (43) located on the base member (40) and containing a first element (43a) and a second element (43b), wherein
the first element (43a) is one or more elements having:
a smaller first ionization energy than chromium; and
a smaller free energy of formation of oxide per mole of oxygen than chromium,
the second element (43b) is Fe,
the covering part (43) contains a first oxide that is an oxide of the first element (43a), the first oxide being CeO₂, and
the second element (43b) is in the first oxide as a solid solution.

2. The electrically conductive member (18) according to claim 1, wherein the covering part (43) contains a second oxide that is an oxide of the second element (43b).

3. The electrically conductive member (18) according to claim 1 or 2, further comprising:
a coating layer (44) having difference in a composition from the covering part (43) and being porous, wherein
the covering part (43) is located between the base member (40) and the coating layer (44).

4. The electrically conductive member (18) according to claim 3, wherein
the coating layer (44) contains the first element (43a) and/or the second element (43b).

5. The electrically conductive member (18) according to any one of claims 1 to 4, wherein
the covering part (43) comprises a plurality of particles, each of the plurality of particles containing the first element (43a) and the second element (43b).

6. The electrically conductive member (18) according to any one of claims 1 to 5, wherein
the covering part (43) comprises a plurality of particles containing the first element (43a) and a plurality of particles containing the second element (43b).

7. The electrically conductive member (18) according to any one of claims 1 to 5, wherein
the covering part (43) comprises a coating film containing the first element (43a) and the second element (43b) and covering the base member (40).

8. An electrochemical cell, comprising:
an element portion (3); and
the electrically conductive member (18) according to any one of claims 1 to 7, the electrically conductive member (18) being connected to the element portion (3).

9. The electrochemical cell according to claim 8, wherein
the electrically conductive member (18) comprises:
a first surface (181) connected to the element portion (3);
a second surface (182) located away from the element portion (3); and
a third surface (183) connecting the first surface (181) and the second surface (182), and
a first area ratio of the covering part (43) located between the first surface (181) and the base member (40) is greater than a second area ratio of the covering part (43) located between the third surface (183) and the base member (40).

10. An electrochemical cell comprising:
an element portion (3); and
the electrically conductive member (18) according to claim 8, the electrically conductive member (18) being connected to the element portion (3), wherein
the electrically conductive member (18) comprises:
a first surface (181) connected to the element portion (3);
a second surface (182) located away from the element portion (3); and
a third surfaces (183) connecting the first surface (181) and the second surface (182), and
the covering part (43) comprises:
a first average thickness located between the first surface (181) and the base member (40); and
a second average thickness located between the third surface (183) and the base member (40), wherein
the first average thickness is greater than the second average thickness.

11. An electrochemical cell device, comprising:
a cell stack (11) comprising the electrochemical cell according to any one of claims 8 to 10.

12. A module (100) comprising:
the electrochemical cell device according to claim 11; and
a storage container (101) housing the electrochemical cell device.

13. A module housing device (110), comprising:
the module (100) according to claim 12;
an auxiliary device configured to operate the module (100); and
an external case (111) housing the module (100) and the auxiliary device.

## Patentansprüche

1. Elektrisch leitfähiges Element (18), aufweisend:
ein Basiselement (40), das Chrom enthält, und
einen Abdeckteil (43), der auf dem Basiselement (40) angeordnet ist und ein erstes Element (43a) und ein zweites Element (43b) enthält, wobei
das erste Element (43a) eines oder mehrere Elemente ist, aufweisend:
eine geringere erste Ionisierungsenergie als Chrom und
eine geringere freie Oxidbildungsenergie pro Mol Sauerstoff als Chrom,
das zweite Element (43b) Fe ist,
der Abdeckteil (43) ein erstes Oxid enthält, das ein Oxid des ersten Elements (43a) ist, wobei das erste Oxid CeO₂ ist und
das zweite Element (43b) in dem ersten Oxid als feste Lösung vorliegt.

2. Elektrisch leitfähiges Element (18) gemäß Anspruch 1, wobei der Abdeckteil (43) ein zweites Oxid enthält, das ein Oxid des zweiten Elements (43b) ist.

3. Elektrisch leitfähiges Element (18) gemäß Anspruch 1 oder 2, ferner aufweisend:
eine Beschichtungsschicht (44), die eine andere Zusammensetzung als der Abdeckteil (43) hat und porös ist, wobei
der Abdeckteil (43) zwischen dem Basiselement (40) und der Beschichtungsschicht (44) positioniert ist.

4. Elektrisch leitfähiges Element (18) gemäß Anspruch 3, wobei
die Beschichtungsschicht (44) das erste Element (43a) und/oder das zweite Element (43b) enthält.

5. Elektrisch leitfähiges Element (18) gemäß irgendeinem der Ansprüche 1 bis 4, wobei
der Abdeckteil (43) eine Mehrzahl von Partikeln aufweist, wobei jeder aus der Mehrzahl von Partikeln das erste Element (43a) und das zweite Element (43b) enthält.

6. Elektrisch leitfähiges Element (18) gemäß irgendeinem der Ansprüche 1 bis 5, wobei
der Abdeckteil (43) eine Mehrzahl von Partikeln, die das erste Element (43a) enthalten, und eine Mehrzahl von Partikeln, die das zweite Element (43b) enthalten, aufweist.

7. Elektrisch leitfähiges Element (18) gemäß irgendeinem der Ansprüche 1 bis 5, wobei
der Abdeckteil (43) einen Beschichtungsfilm aufweist, der das erste Element (43a) und das zweite Element (43b) enthält und das Basiselement (40) bedeckt.

8. Elektrochemische Zelle, aufweisend:
einen Elementabschnitt (3) und
das elektrisch leitfähige Element (18) gemäß irgendeinem der Ansprüche 1 bis 7, wobei das elektrisch leitfähige Element (18) mit dem Elementabschnitt (3) verbunden ist.

9. Elektrochemische Zelle gemäß Anspruch 8, wobei
das elektrisch leitfähige Element (18) aufweist:
eine erste Fläche (181), die mit dem Elementabschnitt (3) verbunden ist,
eine zweite Fläche (182), die von dem Elementabschnitt (3) entfernt angeordnet ist, und
eine dritte Fläche (183), die die erste Fläche (181) und die zweite Fläche (182) verbindet, und
ein erstes Flächenverhältnis des Abdeckteils (43), der sich zwischen der ersten Fläche (181) und dem Basiselement (40) befindet, größer als ein zweites Flächenverhältnis des Abdeckteils (43) ist, der sich zwischen der dritten Fläche (183) und dem Basiselement (40) befindet.

10. Elektrochemische Zelle, aufweisend:
einen Elementabschnitt (3) und
das elektrisch leitfähige Element (18) gemäß Anspruch 8, wobei das elektrisch leitfähige Element (18) mit dem Elementabschnitt (3) verbunden ist, wobei
das elektrisch leitfähige Element (18) aufweist:
eine erste Fläche (181), die mit dem Elementabschnitt (3) verbunden ist,
eine zweite Fläche (182), die von dem Elementabschnitt (3) entfernt angeordnet ist, und
eine dritte Fläche (183), die die erste Fläche (181) und die zweite Fläche (182) verbindet, und
der Abdeckteil (43) aufweist:
eine erste durchschnittliche Dicke, die zwischen der ersten Fläche (181) und dem Basiselement (40) angeordnet ist, und
eine zweite durchschnittliche Dicke, die zwischen der dritten Fläche (183) und dem Basiselement (40) angeordnet ist, wobei
die erste durchschnittliche Dicke größer als die zweite durchschnittliche Dicke ist.

11. Elektrochemische-Zelle-Vorrichtung, aufweisend:
einen Zellenstapel (11), der die elektrochemische Zelle gemäß irgendeinem der Ansprüche 8 bis 10 aufweist.

12. Modul (100), aufweisend:
die Elektrochemische-Zelle-Vorrichtung gemäß Anspruch 11 und
einen Speicherbehälter (101), der die Elektrochemische-Zelle-Vorrichtung aufnimmt.

13. Modulgehäusevorrichtung (110), aufweisend:
das Modul (100) gemäß Anspruch 12,
eine Hilfsvorrichtung, die konfiguriert ist, um das Modul (100) zu betreiben, und
ein externes Gehäuse (111), das das Modul (100) und die Hilfsvorrichtung aufnimmt.

## Revendications

1. Élément électriquement conducteur (18), comprenant :
un élément de base (40) contenant du chrome, et
une partie de recouvrement (43) disposée sur l'élément de base (40) et comprenant un premier élément (43a) et un deuxième élément (43b), dans lequel
le premier élément (43a) est un ou plusieurs éléments présentant :
une première énergie d'ionisation inférieure à celle du chrome et
une énergie de formation d'oxyde libre par mole d'oxygène inférieure à celle du chrome,
le deuxième élément (43b) est Fe,
la partie de recouvrement (43) contient un premier oxyde qui est un oxyde du premier élément (43a), le premier oxyde étant CeO₂, et
le deuxième élément (43b) est présent dans le premier oxyde sous forme de solution solide.

2. Élément électriquement conducteur (18) selon la revendication 1, dans lequel la partie de recouvrement (43) contient un deuxième oxyde qui est un oxyde du deuxième élément (43b).

3. Élément électriquement conducteur (18) selon la revendication 1 ou 2, comprenant en outre :
une couche de revêtement (44) qui a une composition différente de celle de la partie de recouvrement (43) et qui est poreuse,
la partie de recouvrement (43) étant positionnée entre l'élément de base (40) et la couche de revêtement (44).

4. Élément électriquement conducteur (18) selon la revendication 3, dans lequel
la couche de revêtement (44) contient le premier élément (43a) et/ou le deuxième élément (43b).

5. Élément électriquement conducteur (18) selon l'une quelconque des revendications 1 à 4, dans lequel
la partie de recouvrement (43) comprend une pluralité de particules, chacune de la pluralité de particules contenant le premier élément (43a) et le deuxième élément (43b).

6. Élément électriquement conducteur (18) selon l'une quelconque des revendications 1 à 5, dans lequel
la partie de recouvrement (43) comprend une pluralité de particules contenant le premier élément (43a) et une pluralité de particules contenant le deuxième élément (43b).

7. Élément électriquement conducteur (18) selon l'une quelconque des revendications 1 à 5, dans lequel
la partie de recouvrement (43) comprend un film de revêtement qui contient le premier élément (43a) et le deuxième élément (43b) et recouvre l'élément de base (40).

8. Cellule électrochimique, comprenant :
une partie d'élément (3) et
l'élément électriquement conducteur (18) selon l'une quelconque des revendications 1 à 7, dans laquelle l'élément électriquement conducteur (18) est connecté à la partie d'élément (3).

9. Cellule électrochimique selon la revendication 8, dans laquelle
l'élément électriquement conducteur (18) comprend :
une première surface (181) reliée à la partie d'élément (3),
une deuxième surface (182) située à distance de la partie d'élément (3), et
une troisième surface (183) reliant la première surface (181) et la deuxième surface (182), et
un premier rapport de surface de la partie de recouvrement (43) située entre la première surface (181) et l'élément de base (40) est supérieur à un deuxième rapport de surface de la partie de recouvrement (43) située entre la troisième surface (183) et l'élément de base (40).

10. Cellule électrochimique, comprenant :
une partie d'élément (3) et
l'élément électriquement conducteur (18) selon la revendication 8, l'élément électriquement conducteur (18) étant relié à la partie d'élément (3), dans laquelle
l'élément électriquement conducteur (18) comprend :
une première surface (181) reliée à la partie d'élément (3),
une deuxième surface (182) éloignée de la partie d'élément (3), et
une troisième surface (183) reliant la première surface (181) et la deuxième surface (182), et
la partie de recouvrement (43) comprend :
une première épaisseur moyenne située entre la première surface (181) et l'élément de base (40), et
une deuxième épaisseur moyenne située entre la troisième surface (183) et l'élément de base (40), dans laquelle
la première épaisseur moyenne est supérieure à la deuxième épaisseur moyenne.

11. Dispositif à cellule électrochimique, comprenant :
une pile de cellules (11) comprenant la cellule électrochimique selon l'une quelconque des revendications 8 à 10.

12. Module (100), comprenant :
le dispositif à cellule électrochimique selon la revendication 11, et
un récipient de stockage (101) qui loge le dispositif à cellule électrochimique.

13. Dispositif de boîtier de module (110), comprenant :
le module (100) selon la revendication 12,
un dispositif auxiliaire configuré pour faire fonctionner le module (100), et
un boîtier externe (111) logeant le module (100) et le dispositif auxiliaire.
